# FASCICULE DE BREVET EUROPEEN

(11) **EP 4 260 430 B1**
(45) Date de publication et mention de la délivrance du brevet: **29.07.2026**
(21) Numéro de dépôt: 21830639.7
(22) Date de dépôt: 06.12.2021
(51) Int. Cl.: H02J 7/54

(54) **PROCÉDÉ D' ÉQUILIBRAGE**
AUSWUCHTVERFAHREN
BALANCING METHOD

(30) Priorité: 08.12.2020 FR 2012815
(43) Date de publication de la demande: 18.10.2023
(73) Titulaire: Ampere SAS, 92100 Boulogne-Billancourt (FR)
(72) Inventeur: DRIEMEYER FRANCO, Ana-Lucia, 78084 GUYANCOURT (FR); VIOLLIN, Pierre-Mikael, 78084 GUYANCOURT (FR)
(74) Mandataire: Renault Group
(86) Numéro de dépôt international: PCT/EP2021/084327
(87) Numéro de publication internationale: WO 2022/122621

(56) Documents cités:
- EP-A1- 3 790 151
- WO-A1-2020/085819
- US-A1- 2018 354 387
- US-A1- 2019 361 075
- US-A1- 2020 011 934
- US-A1- 2020 153 255

## Description

L'invention concerne un procédé d'équilibrage des cellules d'une batterie d'accumulateur électrique.

En particulier, l'invention concerne la gestion des batteries de véhicules automobile électriques ou hybrides.

Un véhicule électrique, hybride ou encore hybride rechargeable, comporte une batterie d'accumulateurs électrique formée d'un grand nombre de cellules en série et/ou en parallèle.

Si dans une batterie d'accumulateurs, toutes les cellules ont des caractéristiques proches les unes des autres, il existe toutefois des dispersions ou différences, notamment physiques, telles qu'une dispersion de capacité en Ampères-heures (Ah), et de résistance en ohms (Ω). Il existe également des dispersions, généralement temporaires, dans les états de ces cellules, comme la différence d'état de charge, généralement appelé SOC (de l'anglais *State* Of *Charge*), et/ou de température.

Au cours du temps et de l'utilisation de la batterie, toutes ces dispersions physiques et différences d'état amènent les cellules à vieillir différemment. Cette différence dans l'évolution du vieillissement des cellules se traduit par un état de santé, connu sous l'abréviation SOH (de l'anglais *State Of Health*), différent d'une cellule à l'autre.

Toutefois, la différence d'état de charge entre les cellules montées en série est un paramètre limitant puisque la capacité totale utilisable de la batterie est impactée directement. En effet, plus la différence de charge entre les cellules est grande, plus la capacité totale utilisable de la batterie diminue. Cela a donc un impact négatif sur l'autonomie du véhicule automobile électrique.

C'est pourquoi, il est nécessaire de procéder à l'équilibrage des cellules de manière régulière. Cet équilibrage est assuré par un organe de gestion des batteries, connu sous le terme anglo-saxon de *Battery Management System,* (*BMS*), directement et de façon autonome.

Dans la majorité des cas, il s'agit d'un équilibrage dit « dissipatif » ou encore appelé « passif » qui consiste à équilibrer les états de charge des cellules en déchargeant les cellules dans une résistance jusqu'à un état de charge cible, en général l'état de charge de la cellule ayant le SOC le plus faible.

Lorsque le circuit d'équilibrage est bien dimensionné, c'est-à-dire lorsque le courant d'équilibrage est suffisant, et lorsque la stratégie d'équilibrage est utilisée régulièrement, la dispersion d'état de charge entre les cellules est maintenue inférieure à un seuil donné. Ce seuil dépend de la précision sur la mesure des tensions cellule entre autres.

Cependant, cette stratégie d'équilibrage ne peut être activée que pendant le fonctionnement du véhicule.

Ces stratégies ne permettent donc pas d'éviter le déséquilibre des cellules lors des longues phases de parking.

**Il** est de plus connu que l'équilibrage classique des cellules n'est pas dimensionné pour équilibrer pendant les phases de roulage un nombre d'ampères-heure suffisant pour les véhicules automobiles électrique.

Ainsi, à titre d'exemple, dans le cadre d'un équilibrage classique, et pour une tension nominale cellule de 2.5V, avec une résistance d'équilibrage de 130 Ohms, si l'on considère un profil d'utilisateur de véhicule automobile avec 25 jours d'utilisation par mois, 20 minutes de trajet journalier dans le pire des cas, et 1h20 de charge par mois, alors dans ce cas précis même l'équilibrage actif ne pourra rééquilibrer que 0,064423077 Ah pour un besoin de 0,7Ah, en considérant une cellule de 140 Ah.

Par conséquent afin de pouvoir assurer un équilibrage des cellules pour tous les profils d'utilisation du véhicule automobile, il est nécessaire de déployer une stratégie d'équilibrage autonome, aussi appelée *balancing stand-alone* en anglais, fonctionnant lorsque le véhicule automobile est endormi. On entend par endormi l'état d'un véhicule automobile à l'arrêt et pour lequel les calculateurs sont arrêtés.

L'objectif étant en outre de ne pas consommer d'énergie sur le réseau de bord véhicule, puisqu'il il est nécessaire de réaliser cette opération avec tous les calculateurs endormis, y compris le BMS.

Aussi il existe le besoin d'une méthode d'équilibrage des cellules autonome, fonctionnant lorsque le véhicule automobile est endormi et ne provoquant ni échauffement ni sur-décharge des cellules.

On connaît notamment dans l'art antérieur, le document US 2018/0354387 A1 qui décrit un procédé d'équilibrage des cellules de batterie lorsque le véhicule automobile est endormi, en mettant en oeuvre des circuits intégrés autonomes, tels que des circuits intégrés connus sous le nom d'ASIC, de l'anglais *Application-Specific Integrated Circuit.* Toutefois le procédé décrit est relativement peu efficace et ne permet pas d'optimiser l'autonomie du véhicule automobile. Le document US 2019/361075 A1 divulgue un autre exemple de procédé de commande de l'équilibrage des cellules d'une batterie d'accumulateurs électriques.

Aussi, l'invention vise à proposer une solution d'équilibrage des cellules autonome et optimisée, fonctionnant lorsque le véhicule automobile est endormi et ne provoquant pas d'échauffement de la batterie, ou de ses organes de commande, ni sur-décharge des cellules.

A cet effet on propose un procédé de commande de l'équilibrage des cellules d'une batterie d'accumulateurs électriques d'un système électrique comprenant un organe de commande principal et une pluralité de dispositifs esclaves autonomes ;
lesdites cellules de ladite batterie étant séparées en une pluralité de sous-groupes, associés chacun à un dispositif esclave autonome, et lesdites cellules de chaque sous-groupe étant agencées les unes à côté des autres,
chaque cellule de chaque sous-groupe étant chacune connectée à un circuit sur le dispositif esclave autonome comprenant un interrupteur commandé associé et une résistance associée,
lesdites résistances de chaque dispositif esclave autonome étant montées en ligne ;
pour chaque sous-groupe, chaque dispositif esclave autonome est adapté pour recevoir des ordres de commande dudit organe de commande principal et pour commander lesdites interrupteurs commandés en fonction des ordres de commande reçus de sorte à équilibrer les charges desdites cellules dudit sous-groupe.

Ledit procédé comprend pour chaque dispositif esclave autonome de chaque sous-groupe de cellules, des étapes consistant à :
- Recevoir, pour chaque cellule associée audit dispositif esclave autonome la quantité de charge électrique à équilibrer ;
- Déterminer, parmi l'ensemble des cellules associées audit dispositif esclave autonome, la cellule présentant la plus grande quantité de charge électrique à équilibrer ;
- Sélectionner en tant que cellules candidates à l'équilibrage les autres cellules dudit sous-groupe associées à une résistance non adjacente à la résistance associée à ladite cellule présentant la plus grande quantité de charge électrique à équilibrer ;
- Exclure de ladite sélection de cellules candidates les cellules pour lesquelles la charge à équilibrer est inférieure à une valeur de seuil prédéterminée ;
- Commander audit dispositif esclave autonome de procéder à la commande des interrupteurs connectés de sorte à réaliser l'équilibrage de la cellule présentant la plus grande quantité de charge électrique à équilibrer avec les cellules de ladite sélection de cellules candidates ; et
- Éteindre l'organe de commande principal pendant l'équilibrage.

Le procédé permet ainsi de commander, lorsque l'organe de commande principal est éteint, l'équilibrage des cellules de batterie, par décharge des cellules à équilibrer dans leur résistance associée, ce qui permet d'obtenir un équilibrage optimal, tout en s'assurant d'une part qu'il ne provoque pas de surchauffe des dispositifs esclaves, et notamment des résistances d'équilibrage, en sélectionnant les résistances non adjacentes, et en évitant toute sur-décharge, notamment en définissant une valeur de seuil prédéterminée pour qu'une cellule soit éligible à l'équilibrage.

Avantageusement et de manière non limitative, pour chaque sous-groupe, les résistances associées auxdites cellules sont identifiées par le dispositif esclave autonome par un identifiant numérique, les résistances étant agencées dans chaque sous-groupe de sorte que deux résistances adjacentes présentent un identifiant numérique de parité différente, caractérisé en ce que l'étape de sélection est précédée d'une étape d'identification au cours de laquelle on identifie la valeur de parité de la résistance associée à ladite cellule présentant la plus grande quantité de charge électrique à équilibrer ;

L'étape de sélection comprenant la sélection en tant que cellules candidates à l'équilibrage, des cellules associées à des résistances présentant une parité identique à la parité déterminée pour la résistance de la cellule présentant la plus grande quantité de charge électrique à équilibrer.

Ainsi, on procède à une sélection des cellules candidate à l'équilibrage en sélectionnant les cellules associées à une résistance de même parité que la résistance de la cellule à équilibrer, de sorte qu'on détecte de manière relativement simple les résistances non adjacentes à la résistance de la cellule à équilibrer. Ceci permet d'obtenir une méthode de sélection rapide et relativement simple d'un point de vue algorithmique.

Avantageusement et de manière non limitative, ladite valeur de seuil prédéterminée est déterminée en fonction d'une durée maximale de fonctionnement autonome des dispositifs esclaves autonomes multipliée par un courant maximal d'équilibrage entre deux cellules. Ceci permet d'obtenir une valeur de seuil pertinente et relativement optimale.

Toutefois l'invention n'est pas limitée à un tel calcul et selon une alternative la valeur de seuil prédéterminée peut être fixée dans une étape préalable à la mise en œuvre du procédé.

L'invention concerne aussi un organe de commande principal d'un système électrique comprenant une batterie d'accumulateurs électriques et une pluralité de dispositifs esclaves autonomes ;
lesdites cellules de ladite batterie étant séparées en une pluralité de sous-groupes, associés chacun à un dispositif esclave autonome, et lesdites cellules de chaque sous-groupe étant agencées les unes à côté des autres,
chaque cellule de chaque sous-groupe étant chacune connectée à un circuit sur le dispositif esclave autonome comprenant un interrupteur commandé associé et une résistance associée,
lesdites résistances de chaque dispositif esclave autonome étant montées en ligne ;
pour chaque sous-groupe, chaque dispositif esclave autonome est adapté pour recevoir des ordres de commande dudit organe de commande principal et pour commander lesdites interrupteurs commandés en fonction des ordres de commande reçus de sorte à équilibrer les charges desdites cellules dudit sous-groupe ;
caractérisé en ce que ledit organe de commande principal comprend :
   - Des moyens de réception, pour chaque cellule associée audit dispositif esclave autonome, de la quantité de charge électrique à équilibrer ;
   - Des moyens de détermination, parmi l'ensemble des cellules associées de chaque dispositif esclave autonome, de la cellule présentant la plus grande quantité de charge électrique à équilibrer, pour chaque dispositif esclave autonome ;
   - Des moyens de sélection, en tant que cellules candidates à l'équilibrage, des autres cellules dudit sous-groupe associées à une résistance non adjacente à la résistance associée à ladite cellule présentant la plus grande quantité de charge électrique à équilibrer ;
   - Des moyens d'exclusion de ladite sélection de cellules candidates des cellules pour lesquelles la charge à équilibrer est inférieure à une valeur de seuil prédéterminée, pour chaque dispositif esclave autonome ;
   - Des moyens de commande à chaque dispositif esclave autonome de procéder à la commande des interrupteurs connectés de sorte à réaliser l'équilibrage de la cellule présentant la plus grande quantité de charge électrique à équilibrer avec les cellules de ladite sélection de cellules candidates ; et
   - Des moyens d'auto-extinction pendant l'équilibrage.

L'invention concerne aussi un système électrique comprenant une batterie d'accumulateurs électriques, une pluralité de dispositifs esclaves autonomes ; et un organe de commande principal tel que décrit précédemment, adapté pour mettre en œuvre le procédé décrit précédemment.

L'invention concerne aussi un véhicule automobile comprenant un système électrique tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique d'un système électrique selon l'invention ; et
[Fig. 2] est un organigramme d'une mise en œuvre du procédé selon l'invention.

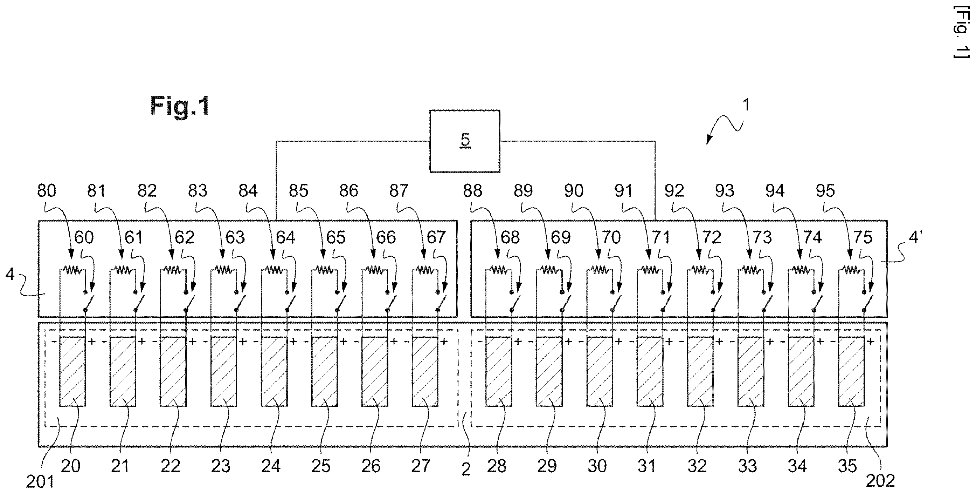

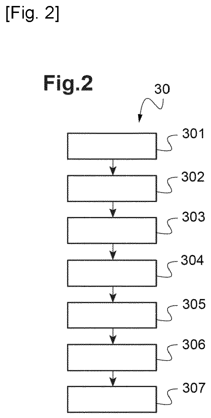

Les figures 1 et 2 se rapportant au même premier mode de réalisation de l'invention, elles seront commentées simultanément.

Un système électrique 1 d'un véhicule automobile électrique, hybride ou hybride rechargeable comprend une batterie d'accumulateurs électriques 2.

Cette batterie d'accumulateurs électriques 2 est faite d'une pluralité de cellules distinctes 20-35, agencées les unes au voisinage des autres.

Les cellules sont dans cet exemple numérotées de sorte à pouvoir aussi être identifiées par une valeur de parité, les cellules paires associées à un nombre pair, et les cellules impaires associées à un nombre impair, de sorte que les cellules sont alignées en alternant une cellule paire avec une cellule impaire.

Les cellules sont divisées en deux sous-groupes 201 et 202, le premier sous-groupe 201 comprenant les cellules 20 à 27, et le deuxième sous-groupe comprenant les cellules 38 à 35.

Si dans le présent exemple chaque sous-groupe 201, 202 comprend 8 cellules, l'invention n'est pas limitée à cet unique exemple. En particulier il est connu qu'un sous-groupe peut comprendre entre 6 et 12 batteries, mais l'homme du métier serait libre aussi de créer des sous-groupes plus petits ou plus grands, bien que l'efficacité de l'invention puisse s'en trouver diminuée.

Chaque sous-groupe de cellules 201, 202 est associé à un dispositif esclave autonome 4, 4', qui est dans ce mode de réalisation un ASIC de l'anglais *Application-Specific Integrated Circuit,* que l'on peut traduire en français par circuit intégré propre à une application. Toutefois les dispositifs esclaves autonomes 4, 4' ne sont pas limités à ce seul type de composant. Ils peuvent aussi être, à titre d'exemple non limitatif des circuits logiques programmables, connus sous le nom de FPGA de l'anglais *Field Programmable Gate Arrays,* un microcontrôleur, un micro-processeur

Les dispositifs esclaves autonomes 4, 4' comprennent en outre pour chaque cellule un interrupteur commandé 60-75 et une résistance 80-95, par exemple une résistance de valeur comprise entre 50 Ohms et 150 Ohms, dans ce mode de réalisation une valeur de 100 Ohms.

Pour chaque cellule 20-35 un circuit est ainsi présent dans le dispositif esclave associé 4, 4' permettant l'équilibrage, de la cellule 20-35. Ce circuit comprenant en série une résistance 80-95 et un interrupteur commandé 60-75.

Lorsque la cellule 20-35 s'équilibre, elle se décharge alors dans sa résistance associée 80-95, cette décharge constituant l'équilibrage. Autrement dit on réduit la charge de la cellule 20-35 par un décharge dans la résistance associée 80-95 afin de la ramener à un niveau de charge équilibré. Toutefois cette situation amène à un échauffement notable de la résistance associée 80-95.

L'agencement classique des résistances 80-95 sur les dispositifs esclaves autonomes 4, 4' est une disposition en ligne, c'est-à-dire qu'elles sont spatialement alignées les unes à côté des autres dans chacun des dispositifs esclaves autonomes considérés, tel que représenté figure 1.

Chaque dispositif esclave autonome 4, 4' est adapté pour commander les interrupteurs respectivement 60-67 et 68-75 associés à chacune de leurs cellules 20-27 et 28-35.

En commandant la fermeture d'un interrupteur 60-75, le dispositif esclave autonome 4, 4' permet ainsi l'équilibrage de la cellule associée 20-35 par rapport à une autre cellule 20-35 du même sous-groupe 201, 202.

Or, lorsqu'une cellule s'équilibre 20-35, la résistance associée 80-95 s'échauffe. Aussi il convient d'éviter que deux cellules adjacentes 20-35 se déchargent simultanément, car ceci pourrait provoquer une surchauffe des résistances adjacentes 80-95 et leur disfonctionnement.

Le système électrique 1 comprend un organe de commande principal 5 commandant le fonctionnement des dispositifs esclaves autonomes 4, 4'. Autrement dit l'organe de commande principal 5 est l'organe maître des dispositifs esclaves autonomes 4, 4'.

L'organe de commande principal 5 peut être par exemple un calculateur embarqué ou tout autre dispositif de calcul apte à communiquer et recevoir des informations de mesure des cellules de batterie et à commander des ordres aux dispositifs esclaves autonomes 4, 4'.

Cet organe de commande principal 5 et les dispositifs esclaves autonomes 4, 4' forment un ensemble généralement connu sous l'abréviation de BMS, de l'anglais *Battery Management System,* en français système de gestion de batterie.

L'organe de commande principal 5, met en œuvre un procédé 30 de commande aux dispositifs esclaves autonomes 4, 4' d'équilibrage des cellules 20-35 de la batterie 2, de sorte qu'il puisse être éteint durant la réalisation effective de cet équilibrage.

Ce procédé 30 est dans ce mode de réalisation déclenché lorsque l'organe de commande principal 5 reçoit un ordre d'arrêt ou de mise en veille. Ainsi, lorsqu'un ordre d'arrêt et de mise en sommeil du véhicule automobile est transmis à l'organe de commande principal 5 ce dernier met en œuvre le procédé 30 suivant afin d'organiser l'équilibrage des batteries durant sa période d'arrêt ou de veille.

Ce procédé 30 comprend des étapes mises en œuvre en parallèle ou en série pour chaque sous-groupe 201, 202.

Ainsi pour chaque sous-groupe 201, 202, on met en œuvre tout d'abord une étape de réception 301, pour chaque cellule 20-35 associées audit dispositif esclave autonome 4, 4', de la quantité de charge électrique à équilibrer.

On entend dans ce mode de réalisation par charge électrique une valeur de charge en Ampère-Heure, généralement écrit Ah, ou en Coulomb C.

On procède alors à la détermination 302 parmi l'ensemble des cellules 20-35 de ce dispositif esclave autonome 4, 4', de la cellule présentant la plus grande quantité de charge électrique à équilibrer.

On procède alors à la sélection 304 des cellules du même sous-groupe permettant de procéder à l'équilibrage de la tension avec ladite cellule déterminée 302.

A cet effet, on met en œuvre dans ce mode de réalisation des étapes de sélection des cellules par valeur de parité de leurs résistances associées 80-95. Cette solution permet en effet d'être relativement rapide d'un point de vue algorithmique à mettre en œuvre.

Dans cet exemple les cellules 20-35 sont associées chacune à une résistance 80-85 dont la référence numérique présente une même unité. Ainsi par exemple la cellule 21 est associée à une résistance 81, toutes deux des valeurs impaires.

Comme exposé précédemment l'échauffement de résistances 80-95 adjacentes doit être évité.

Ainsi, on procède dans un premier temps à une étape d'identification de la valeur de parité de la résistance 80-95 de la cellule déterminée à l'étape précédente 302.

A cet effet, on associe à chaque cellule 20-35 et à chaque résistance associée 80-95 du sous-groupe 201, 202 une valeur numérique, par exemple sa référence numérique dans l'exemple, et on vérifier si le reste de la division euclidienne de cette valeur par 2 est nulle, dans ce cas le nombre est paire, ou non nulle, dans ce cas le nombre est impaire.

Toutefois l'invention n'est pas limitée à cette unique manière de déterminer la parité d'une cellule et l'homme du métier pourra mettre en œuvre toute méthode qui lui semble adaptée. En particulier un indicateur de parité, par exemple une valeur binaire, pourra être associé à chaque cellule, de sorte à ne pas avoir à recalculer plusieurs fois la parité de la cellule.

Par ailleurs, si ce premier exemple de réalisation est basé sur une sélection de parité, on peut aussi prévoir toute sélection de résistance de cellule non adjacente par la sélection des résistances de valeur congrue modulo N>2 avec la résistance de la cellule déterminée à l'étape 302. Par exemple, on peut notamment sélectionner une résistance séparée par deux autre résistances, autrement dit une résistance sur trois, donc des résistances de valeurs congrues modulo 3 avec la résistance déterminée à l'étape 302.

On procède alors à la sélection 304 d'un ensemble de cellules candidates à l'équilibrage, comprenant toutes les cellules du sous-groupe dont la résistance associée 80-95 présente une parité identique à la parité déterminée pour résistance de la cellule à équilibrer.

On procède ensuite à l'exclusion 305 de cet ensemble de cellules candidates, des cellules pour lesquelles la charge à équilibrer est inférieure à une valeur de seuil prédéterminée.

La valeur de seuil prédéterminée est calculée comme le produit du temps maximal de fonctionnement des dispositifs esclaves autonomes 4, 4' par le courant maximal d'équilibrage.

Dans le cas des ASIC, le temps maximal est par exemple défini dans une plage allant d'une heure à deux heures, par exemple une durée de 3640 secondes, et par exemple pour un courant d'équilibrage maximal compris dans une plage de valeurs allant de 20mA à 100mA.

L'invention n'est toutefois pas limitée à cet ordre précis de mise en œuvre des étapes de sélection 304 et d'exclusion 305. On pourrait par exemple prévoir qu'on procède tout d'abord à l'exclusion 305 de toutes les cellules présentant un charge à équilibrer inférieure à la valeur de seuil prédéterminée, puis sélectionner parmi toutes les cellules restantes les cellules présentant une parité identique à la parité déterminée pour la cellule à équilibrer. Le résultat de sélection serait alors identique.

On met alors en œuvre une étape de commande au dispositif esclave autonome associé à ce sous-groupe 201, 202 afin qu'il procède à l'équilibrage de la cellule présentant la plus grande quantité de charge électrique à équilibrer avec les cellules de ladite sélection de cellules candidates, en commandant les interrupteurs commandés associés.

Ensuite, une fois que tous les dispositifs esclaves autonomes 4, 4' ont reçu la commande d'équilibrage, on procède à l'arrêt ou la mise en veille de l'organe de commande principal 5.

Le procédé 30 ainsi décrit permet avantageusement de commander, à l'endormissement de l'organe de commande principale 5, par exemple un BMS, individuellement chacun des dispositif esclaves autonomes 4, 4', par exemple des ASIC, pour qu'ils pilotent les interrupteurs commandés 60-75 d'équilibrage configurés pendant un temps déterminé, soit prédéterminée soit configurable en fonction du besoin.

Le procédé est en outre adapté pour :
- Ne pas provoquer d'échauffement anormal des résistances 80-95, par la sélection de cellules 20-35 non adjacentes à équilibrer,
- Ne pas sur-décharger les cellules, par l'établissement d'une valeur de seuil minimal,

Tout en ne dégradant aucune performance du véhicule automobile, le fonctionnement du procédé étant totalement autonome.

Selon un second mode de réalisation, on procède à la sélection 304 des cellules du même sous-groupe 201, 202 pour de procéder à l'équilibrage de la tension avec ladite cellule déterminée 302, selon une autre technique que la sélection par parité du premier mode de réalisation. Dans ce second mode de réalisation on sélectionne toutes les cellules non adjacentes à la cellule à équilibrer. A cet effet, le dispositif esclave autonome associé peut comprendre tout type d'organisation des données pour effectuer une telle détermination, par exemple en comprenant une cartographie mémorisée de l'agencement des cellules dans le sous-groupe 201, 202.

Un tel procédé de commande de l'équilibrage des cellules de batterie en mode « endormi » peut être appliqué à tous autre système de surveillance de batteries multicellulaires afin de limiter le déséquilibre entre cellules et ainsi préserver l'autonomie, aussi bien dans le domaine de l'automobile que tout autre domaine impliquant une mise en œuvre électronique.

Celui-ci peut par exemple être implémenté pour limiter le déséquilibre des cellules des batteries d'ordinateurs portables.

Le procédé peut également être implémenté dans les systèmes stationnaires dans le cas où le système à une contrainte de consommation sur l'alimentation du calculateur de gestion de la batterie.

## Revendications

1. Procédé (30) de commande de l'équilibrage des cellules (20-35) d'une batterie (2) d'accumulateurs électriques d'un système électrique (1) comprenant un organe de commande principal (5) et une pluralité de dispositifs esclaves autonomes (4, 4') ;
lesdites cellules (20-35) de ladite batterie (2) étant séparées en une pluralité de sous-groupes (201, 202), associés chacun à un dispositif esclave autonome (4, 4'), et lesdites cellules (20-35) de chaque sous-groupe (201, 202) étant agencées les unes à côté des autres,
chaque cellule (20-35) de chaque sous-groupe (201, 202) étant chacune connectée à un circuit sur le dispositif esclave autonome (4, 4') comprenant un interrupteur commandé (60-75) associé et une résistance (80-95) associée, lesdites résistances (80-95) de chaque dispositif esclave autonome (4, 4') étant montées spatialement alignées les unes à côté des autres;
pour chaque sous-groupe (201, 202), chaque dispositif esclave autonome (4 ; 4') est adapté pour recevoir des ordres de commande dudit organe de commande principal (5) et pour commander lesdites interrupteurs commandés (60-75) en fonction des ordres de commande reçus de sorte à équilibrer les charges desdites cellules dudit sous-groupe (201, 202);
**caractérisé en ce que** ledit procédé comprend pour chaque dispositif esclave autonome (4, 4') de chaque sous-groupe (201, 202) de cellules, des étapes consistant à :
- Recevoir (301), pour chaque cellule (20-35) associée audit dispositif esclave autonome (4, 4') la quantité de charge électrique à équilibrer ;
- Déterminer (302), parmi l'ensemble des cellules (20-35) associées audit dispositif esclave autonome (4, 4'), la cellule (20-35) présentant la plus grande quantité de charge électrique à équilibrer ;
- Sélectionner (304) en tant que cellules candidates à l'équilibrage les autres cellules (20-35) dudit sous-groupe (201, 202) associées à une résistance (80-95) non adjacente à la résistance associée à ladite cellule présentant la plus grande quantité de charge électrique à équilibrer, et de telle sorte qu'une résistante associée à une cellule sélectionnée ne soit pas adjacente à une autre résistance d'une autre cellule sélectionnée ;
- Exclure (305) de ladite sélection de cellules candidates les cellules pour lesquelles la charge à équilibrer est inférieure à une valeur de seuil prédéterminée ;
- Commander (306) audit dispositif esclave autonome (4, 4') de procéder à la commande des interrupteurs connectés (80-95) de sorte à réaliser l'équilibrage de la cellule présentant la plus grande quantité de charge électrique à équilibrer avec les cellules de ladite sélection de cellules candidates ;
l'organe de commande principal (5) étant éteint pendant l'équilibrage.

2. Procédé (30) selon la revendication 1, dans lequel pour chaque sous-groupe (201, 202), les résistances (80-95) associées auxdites cellules (20-35) sont identifiées par le dispositif esclave autonome (4, 4') par un identifiant numérique, les résistances (80-95) étant agencées dans chaque sous-groupe (201, 202) de sorte que deux résistances (80-95) adjacentes présentent un identifiant numérique de parité différente, **caractérisé en ce que** l'étape de sélection (304) est précédée d'une étape d'identification (303) au cours de laquelle on identifie la valeur de parité de la résistance associée à ladite cellule présentant la plus grande quantité de charge électrique à équilibrer ;
L'étape de sélection (304) comprenant la sélection en tant que cellules candidates à l'équilibrage, des cellules (20-35) associées à des résistances (80-95) présentant une parité identique à la parité déterminée pour la résistance de la cellule présentant la plus grande quantité de charge électrique à équilibrer.

3. Procédé (30) selon la revendication 1 ou 2, **caractérisé en ce que** ladite valeur de seuil prédéterminée est déterminée en fonction d'une durée maximale de fonctionnement autonome des dispositifs esclaves autonomes (4, 4') multipliée par un courant maximal d'équilibrage entre deux cellules.

4. Procédé (30) selon la revendication 1 ou 2, **caractérisé en ce que** ladite valeur de seuil prédéterminée est fixée dans une étape préalable à la mise en œuvre dudit procédé (30).

5. Organe de commande principal (5) d'un système électrique (1) comprenant une batterie (2) d'accumulateurs électriques et une pluralité de dispositifs esclaves autonomes (4, 4') ;
lesdites cellules (20-35) de ladite batterie (2) étant séparées en une pluralité de sous-groupes (201, 202), associés chacun à un dispositif esclave autonome (4, 4'), et lesdites cellules (20-35) de chaque sous-groupe (201, 202) étant agencées les unes à côté des autres,
chaque cellule (20-35) de chaque sous-groupe (201, 202) étant chacune connectée à un circuit sur le dispositif esclave autonome (4, 4') comprenant un interrupteur commandé (60-75) associé et une résistance (80-95) associée,
lesdites résistances (80-95) de chaque dispositif esclave autonome (4, 4') étant montées spatialement alignées les unes à côté des autres;
pour chaque sous-groupe (201, 202), chaque dispositif esclave autonome (4 ; 4') est adapté pour recevoir des ordres de commande dudit organe de commande principal (5) et pour commander lesdites interrupteurs commandés (60-75) en fonction des ordres de commande reçus de sorte à équilibrer les charges desdites cellules dudit sous-groupe (201, 202);
**caractérisé en ce que** ledit organe de commande principal (5) comprend :
- Des moyens de réception, pour chaque cellule (20-35) associée audit dispositif esclave autonome (4, 4'), de la quantité de charge électrique à équilibrer ;
- Des moyens de détermination, parmi l'ensemble des cellules (20-35) associées de chaque dispositif esclave autonome (4, 4'), de la cellule présentant la plus grande quantité de charge électrique à équilibrer, pour chaque dispositif esclave autonome (4, 4') ;
- Des moyens de sélection, en tant que cellules candidates à l'équilibrage, des autres cellules (20-35) dudit sous-groupe associées à une résistance (80-95) non adjacente à la résistance associée à ladite cellule présentant la plus grande quantité de charge électrique à équilibrer, et de telle sorte qu'une résistante associée à une cellule sélectionnée ne soit pas adjacente à une autre résistance d'une autre cellule sélectionnée ;
- Des moyens d'exclusion de ladite sélection de cellules candidates des cellules pour lesquelles la charge à équilibrer est inférieure à une valeur de seuil prédéterminée, pour chaque dispositif esclave autonome (4, 4') ;
- Des moyens de commande à chaque dispositif esclave autonome (4, 4') de procéder à la commande des interrupteurs connectés (80-95) de sorte à réaliser l'équilibrage de la cellule présentant la plus grande quantité de charge électrique à équilibrer avec les cellules de ladite sélection de cellules candidates ; et
- Des moyens d'auto-extinction pendant l'équilibrage.

6. Système électrique (1) comprenant une batterie (2) d'accumulateurs électriques, une pluralité de dispositifs esclaves autonomes (4, 4') ; et un organe de commande principal (5) selon la revendication 5, adapté pour mettre en œuvre le procédé selon l'une quelconque des revendications 1 à 4.

7. Véhicule automobile comprenant un système électrique (1) selon la revendication 6.

## Patentansprüche

1. Verfahren (30) zum Steuern des Ausgleichs der Zellen (20-35) einer Batterie (2) von elektrischen Akkumulatoren eines elektrischen Systems (1), das ein Hauptsteuerorgan (5) und eine Vielzahl von autonomen Slave-Vorrichtungen (4, 4') umfasst;
wobei die Zellen (20-35) der Batterie (2) in eine Vielzahl von Untergruppen (201, 202) getrennt sind, die jeweils einer autonomen Slave-Vorrichtung (4, 4') zugeordnet sind, und wobei die Zellen (20-35) jeder Untergruppe (201, 202) nebeneinander angeordnet sind, wobei jede Zelle (20-35) jeder Untergruppe (201, 202) jeweils an eine Schaltung an der Slave-Vorrichtung (4, 4') angeschlossen ist, die einen zugeordneten gesteuerten Schalter (60-75) und einen zugeordneten Widerstand (80-95) umfasst,
wobei die Widerstände (80-95) jeder autonomen Slave-Vorrichtung (4, 4') räumlich nebeneinander aufgereiht montiert sind;
wobei für jede Untergruppe (201, 202) jede autonome Slave-Vorrichtung (4; 4') dazu angepasst ist, Steuerbefehle von dem Hauptsteuerorgan (5) zu empfangen und die gesteuerten Schalter (60-75) in Abhängigkeit von den empfangenen Steuerbefehlen so zu steuern, dass die Ladungen der Zellen der Untergruppe (201, 202) ausgeglichen werden;
**dadurch gekennzeichnet, dass** das Verfahren für jede autonome Slave-Vorrichtung (4, 4') jeder Untergruppe (201, 202) von Zellen Schritte umfasst, die in Folgendem bestehen:
- Empfangen (301), für jede der autonomen Slave-Vorrichtung (4, 4') zugeordnete Zelle (20-35), der auszugleichenden Menge elektrischer Ladung;
- Bestimmen (302), unter der Gesamtheit der Zellen (20-35), die der autonomen Slave-Vorrichtung (4, 4') zugeordnet sind, der Zelle (20-35), die die größte auszugleichende Menge elektrischer Ladung aufweist;
- Auswählen (304), als Kandidatenzellen für den Ausgleich, der anderen Zellen (20-35) der Untergruppe (201, 202), die einem Widerstand (80-95) zugeordnet sind, der nicht benachbart zu dem Widerstand ist, der der Zelle zugeordnet ist, die die größte auszugleichende Menge elektrischer Ladung aufweist, und so, dass ein Widerstand, der einer ausgewählten Zelle zugeordnet ist, nicht benachbart zu einem anderen Widerstand einer anderen ausgewählten Zelle ist;
- Ausschließen (305) der Zellen, bei denen die auszugleichende Ladung unter einem vorbestimmten Schwellenwert liegt, von der Auswahl von Kandidatenzellen;
- Steuern (306) der autonomen Slave-Vorrichtung (4, 4') derart, dass sie die Steuerung der angeschlossenen Schalter (80-95) vornimmt, so dass der Ausgleich der Zelle, die die größte Menge auszugleichender elektrischer Ladung aufweist, mit den Zellen der Auswahl von Kandidatenzellen durchgeführt wird;
wobei das Hauptsteuerorgan (5) während des Ausgleichs ausgeschaltet ist.

2. Verfahren (30) nach Anspruch 1, wobei für jede Untergruppe (201, 202) die den Zellen (20-35) zugeordneten Widerstände (80-95) von der autonomen Slave-Vorrichtung (4, 4') anhand einer numerischen Kennung identifiziert werden, wobei die Widerstände (80-95) in jeder Untergruppe (201, 202) so angeordnet sind, dass zwei benachbarte Widerstände (80-95) eine numerische Kennung mit unterschiedlicher Parität aufweisen, **dadurch gekennzeichnet, dass** dem Schritt des Auswählens (304) ein Schritt des Identifizierens (303) vorausgeht, in dessen Verlauf der Paritätswert des Widerstands identifiziert wird, der der Zelle zugeordnet ist, die die größte auszugleichende Menge elektrischer Ladung aufweist; wobei der Schritt des Auswählens (304) das Auswählen der Zellen (20-35) als Kandidatenzellen für den Ausgleich umfasst, die Widerständen (80-95) zugeordnet sind, die eine Parität aufweisen, die identisch mit der Parität ist, die für den Widerstand der Zelle bestimmt wurde, die die größte auszugleichende Menge elektrischer Ladung aufweist.

3. Verfahren (30) nach Anspruch 1 oder 2, **dadurch gekennzeichnet, dass** der vorbestimmte Schwellenwert in Abhängigkeit von einer maximalen Betriebsdauer der autonomen Slave-Vorrichtungen (4, 4') multipliziert mit einem maximalen Ausgleichsstrom zwischen zwei Zellen bestimmt wird.

4. Verfahren (30) nach Anspruch 1 oder 2, **dadurch gekennzeichnet, dass** der vorbestimmte Schwellenwert in einem Schritt vor der Durchführung des Verfahrens (30) festgelegt wird.

5. Hauptsteuerorgan (5) eines elektrischen Systems (1), das eine Batterie (2) aus elektrischen Akkumulatoren und eine Vielzahl von autonomen Slave-Vorrichtungen (4, 4') umfasst;
wobei die Zellen (20-35) der Batterie (2) in eine Vielzahl von Untergruppen (201, 202) getrennt sind, die jeweils einer autonomen Slave-Vorrichtung (4, 4') zugeordnet sind, und wobei die Zellen (20-35) jeder Untergruppe (201, 202) nebeneinander angeordnet sind, wobei jede Zelle (20-35) jeder Untergruppe (201, 202) jeweils an eine Schaltung an der Slave-Vorrichtung (4, 4') angeschlossen ist, die einen zugeordneten gesteuerten Schalter (60-75) und einen zugeordneten Widerstand (80-95) umfasst,
wobei die Widerstände (80-95) jeder autonomen Slave-Vorrichtung (4, 4') räumlich nebeneinander aufgereiht montiert sind;
wobei für jede Untergruppe (201, 202) jede autonome Slave-Vorrichtung (4; 4') dazu angepasst ist, Steuerbefehle von dem Hauptsteuerorgan (5) zu empfangen und die gesteuerten Schalter (60-75) in Abhängigkeit von den empfangenen Steuerbefehlen so zu steuern, dass die Ladungen der Zellen der Untergruppe (201, 202) ausgeglichen werden;
**dadurch gekennzeichnet, dass** das Hauptsteuerorgan (5) Folgendes umfasst:
- Mittel zum Empfangen, für jede der autonomen Slave-Vorrichtung (4, 4') zugeordnete Zelle (20-35), der auszugleichenden Menge elektrischer Ladung;
- Mittel zum Bestimmen, unter der Gesamtheit der Zellen (20-35), die der autonomen Slave-Vorrichtung (4, 4') zugeordnet sind, der Zelle, die die größte auszugleichende Menge elektrischer Ladung aufweist, für jede autonome Slave-Vorrichtung (4, 4');
- Mittel zum Auswählen, als Kandidatenzellen für den Ausgleich, der anderen Zellen (20-35) der Untergruppe, die einem Widerstand (80-95) zugeordnet sind, der nicht benachbart zu dem Widerstand ist, der der Zelle zugeordnet ist, die die größte auszugleichende Menge elektrischer Ladung aufweist, und so, dass ein Widerstand, der einer ausgewählten Zelle zugeordnet ist, nicht benachbart zu einem anderen Widerstand einer anderen ausgewählten Zelle ist;
- Mittel zum Ausschließen der Zellen, bei denen die auszugleichende Ladung unter einem vorbestimmten Schwellenwert liegt, von der Auswahl von Kandidatenzellen für jede autonome Slave-Vorrichtung (4, 4');
- Mittel zum Steuern jeder autonomen Slave-Vorrichtung (4, 4') derart, dass sie die Steuerung der angeschlossenen Schalter (80-95) vornimmt, so dass der Ausgleich der Zelle, die die größte Menge auszugleichender elektrischer Ladung aufweist, mit den Zellen der Auswahl von Kandidatenzellen durchgeführt wird;
- Mittel zum Selbstausschalten während des Ausgleichens.

6. Elektrisches System (1), umfassend eine Batterie (2) aus elektrischen Akkumulatoren, eine Vielzahl von autonomen Slave-Vorrichtungen (4, 4') und ein Hauptsteuerorgan (5) nach Anspruch 5, das dazu angepasst ist, das Verfahren nach einem der Ansprüche 1 bis 4 durchzuführen.

7. Kraftfahrzeug, das ein elektrisches System (1) nach Anspruch 6 umfasst.

## Claims

1. Method (30) for controlling balancing of the cells (20-35) of a battery (2) of electrical accumulators of an electrical system (1) comprising a main management unit (5) and a plurality of stand-alone slave devices (4, 4');
said cells (20-35) of said battery (2) being separated into a plurality of sub-groups (201, 202), each associated with one stand-alone slave device (4, 4'), and said cells (20-35) of each sub-group (201, 202) being arranged beside one another,
each cell (20-35) of each sub-group (201, 202) being each connected to a circuit in the stand-alone slave device (4, 4') comprising an associated controlled switch (60-75) and an associated resistor (80-95),
said resistors (80-95) of each stand-alone slave device (4, 4') being mounted spatially aligned beside one another;
for each sub-group (201, 202), each stand-alone slave device (4; 4') is configured to receive control commands from said main management unit (5) and to control said controlled switches (60-75) depending on the received control commands so as to balance the charges of said cells of said sub-group (201, 202);
**characterized in that** said method comprises, for each stand-alone slave device (4, 4') of each sub-group (201, 202) of cells, steps consisting in:
- receiving (301), for each cell (20-35) associated with said stand-alone slave device (4, 4'), the amount of electric charge to be balanced;
- determining (302), among the set of cells (20-35) associated with said stand-alone slave device (4, 4'), the cell (20-35) having the greatest amount of electric charge to be balanced;
- selecting (304), as candidate cells for balancing, the other cells (20-35) of said sub-group (201, 202) that are associated with a resistor (80-95) not adjacent to the resistor associated with said cell having the greatest amount of electric charge to be balanced, in such a way that a resistor associated with a selected cell is not adjacent to another resistor of another selected cell;
- excluding (305), from said selection of candidate cells, cells for which the charge to be balanced is less than a predetermined threshold value;
- commanding (306) said stand-alone slave device (4, 4') to control the connected switches (80-95) so as to balance the cell having the greatest amount of electric charge to be balanced with the cells of said selection of candidate cells;
the main management unit (5) being shut down during balancing.

2. Method (30) according to Claim 1, wherein, for each sub-group (201, 202), the resistors (80-95) associated with said cells (20-35) are identified by the stand-alone slave device (4, 4') by a numerical identifier, the resistors (80-95) being arranged in each sub-group (201, 202) so that two adjacent resistors (80-95) have a numerical identifier of different parity, **characterized in that** that the selecting step (304) is preceded by an identifying step (303) in which the parity value of the resistor associated with said cell having the greatest amount of electric charge to be balanced is identified; the selecting step (304) comprising selecting, as candidate cells for balancing, cells (20-35) associated with resistors (80-95) having a parity identical to the parity determined for the resistor of the cell having the greatest amount of electric charge to be balanced.

3. Method (30) according to Claim 1 or 2, **characterized in that** said predetermined threshold value is determined depending on a maximum duration of stand-alone operation of the stand-alone slave devices (4, 4') multiplied by a maximum balancing current between two cells.

4. Method (30) according to Claim 1 or 2, **characterized in that** said predetermined threshold value is set in a step prior to implementation of said method (30).

5. Main management unit (5) of an electrical system (1) comprising a battery (2) of electric accumulators and a plurality of stand-alone slave devices (4, 4');
said cells (20-35) of said battery (2) being separated into a plurality of sub-groups (201, 202), each associated with one stand-alone slave device (4, 4'), and said cells (20-35) of each sub-group (201, 202) being arranged beside one another,
each cell (20-35) of each sub-group (201, 202) being each connected to a circuit in the stand-alone slave device (4, 4') comprising an associated controlled switch (60-75) and an associated resistor (80-95),
said resistors (80-95) of each stand-alone slave device (4, 4') being mounted spatially aligned beside one another;
for each sub-group (201, 202), each stand-alone slave device (4; 4') is configured to receive control commands from said main management unit (5) and to control said controlled switches (60-75) depending on the received control commands so as to balance the charges of said cells of said sub-group (201, 202);
**characterized in that** said main management unit (5) comprises:
- means for receiving, for each cell (20-35) associated with said stand-alone slave device (4, 4'), the amount of electric charge to be balanced;
- means for determining, among the set of cells (20-35) associated with each stand-alone slave device (4, 4'), the cell having the greatest amount of electric charge to be balanced, for each stand-alone slave device (4, 4');
- means for selecting, as candidate cells for balancing, the other cells (20-35) of said sub-group that are associated with a resistor (80-95) not adjacent to the resistor associated with said cell having the greatest amount of electric charge to be balanced, in such a way that a resistor associated with a selected cell is not adjacent to another resistor of another selected cell;
- means for excluding, from said selection of candidate cells, cells for which the charge to be balanced is less than a predetermined threshold value, for each stand-alone slave device (4, 4');
- means for commanding each stand-alone slave device (4, 4') to control the connected switches (80-95) so as to balance the cell having the greatest amount of electric charge to be balanced with the cells of said selection of candidate cells; and
- means for achieving auto-shutdown during balancing.

6. Electrical system (1) comprising a battery (2) of electrical accumulators, a plurality of stand-alone slave devices (4, 4'), and a main management unit (5) according to Claim 5, said unit being configured to implement the method according to any one of Claims 1 to 4.

7. Motor vehicle comprising an electrical system (1) according to Claim 6.
